Europäisches Patentamt

European Patent Office

Office européen des brevets

(19)

(11) Publication number: **0 159 364**
**A1**

## EUROPEAN PATENT APPLICATION

published in accordance with Art. 158(3) EPC

(21) Application number: **84903757.7**

(22) Date of filing: **11.10.84**

Data of the international application taken as a basis:

(86) International application number:
**PCT/JP 84/00479**

(87) International publication number:
**WO 85/01816 (25.04.85 85/10)**

(51) Int. Cl.⁴: **G 06 F 15/20**, G 06 F 9/26

(30) Priority: **17.10.83 JP 193738/83**

(43) Date of publication of application: **30.10.85**
**Bulletin 85/44**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **KURAKAKE, Mitsuo, 71-302, Kodan-jutaka 6, Tamadaira 4-chome, Hino-shi Tokyo 191 (JP)**
Inventor: **MIYASHITA, Hideo, 38-23, Asahigaoka 2-chome Hino-shi, Tokyo 191 (JP)**
Inventor: **OTSUKA, Shoichi, 70-302, Kodan-jutaku 6, Tamadaira 4-chome, Hino-shi Tokyo 191 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **APPARATUS FOR PROCESSING DIGITAL VIDEO SIGNAL.**

(57) An apparatus for processing a digital video signal which is both economical and fast. The apparatus includes a hardware section (10) which processes and sotres a digital signal, and a microprogram control section (20) which controls the operation of the hardware section (10). The microprogram control section (20) is provided with a microprogram memory (23). A microprogram for extracting values representing features of a figure and a microprogram for pre-editing are stored in the microprogram memory (23) in the form of subroutines.

0159364

## SPECIFICATION

### DIGITAL IMAGE SIGNAL PROCESSOR

### TECHNICAL FIELD

The present invention relates to a digital image signal processor which is provided with an image frame memory and a digital calculation circuit.

### BACKGRAOUND ART

A conventional digital image processor of this kind obtains an external appearance of an object under inspection or the like by an ITV camera or similar means and, after converting it by a binary encoding cirucit or the like into digital image signals, once stores the digitized image signals of one frame in a frame memory, from which they are sequentially read out into a CPU for processing such as extraction of features and so forth, thereby deciding whether the object under inspection is non-defective or defective, or correcting control of the object under inspection.

However, the above prior art apparatus mainly involves software-like processing in the CPU, and hence has the shortcoming that the processing time is prolonged, making it impossible to cope with high-speed processing necessary for a flow process and associated control, or limiting the time for the CPU to perform other related control operations. The use of a CPU capable of high-speed processing is a solution to this problem, but introduces another problem that such a CPU is expensive.

DISCLOSURE OF THE INVENTION

The present invention has been accompishied in view of the abovesaid defects of the prior art, and has for its object to provide a digital image signal processor which is inexpensive but capable of high-speed processing.

To attain the above objective, the digital image signal processor of the present invention is provided with a hardware section for processing and storing a digital image signal supplied thereto and a microprogram control section for controlling the operation of the hardware section. The microprogram control section is provided with a microprogram memory formed by a random access memory, and is arranged so that subroutines necessary for controlling the hardware section and a main routine containing subroutine call instructions for selecting the contents of image processing are transferred from a main memory to the microprogram memory.

BRIEF DESCRIPTION OF THE DRAWINGS

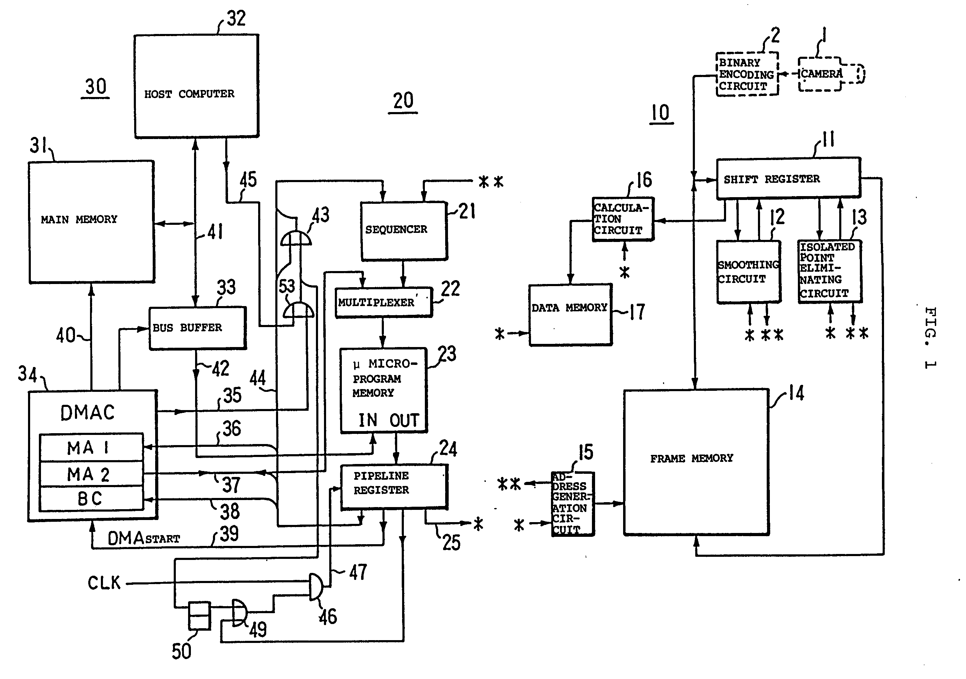

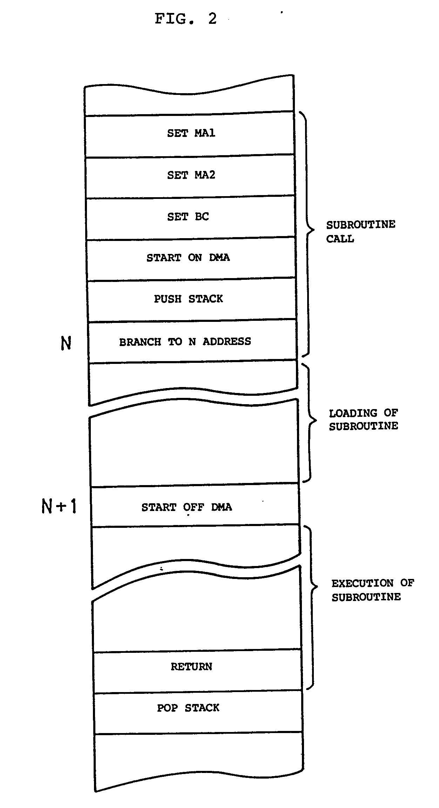

Fig. 1 is a block diagram illustrating the arrangement of an embodiment of the present invention; and Fig. 2 is a conceptual diagram for explaining the operation of the emboidment shown in Fig. 1.

BEST MODE FOR CARRYING OUT THE INVNETION

An embodiment of the digital image processor of the present invention comprises a hardware section 10 for processing and storing a digital image signal supplied thereto, for example, through a camera 1 and a binary encoding circuit 2, a microprogram control section 20 for controlling the operation of the hardware section 10 and a host section 30 provided with a main memory and so forth, as shown in the block diagram of Fig. 1.

The hardware section 10 is equipped with a shift register 11, a smoothing circuit 12, an isolated point eliminating circuit 13, a frame memory 14, an address generation cirucit 15, a digital calculation circuit 16 and a data memory 17. A digital image signal supplied from the binary encoding circuit 2 is shifted in the shift register 11. The shift register 11 transfers and holds, for example, three to four lines of digital image signals of 256 bits per scanning line of the camera 1. The digital image signals of several scanning lines held in the shift register 11 are processed by the smoothing circuit 12 and the isolated point eliminating circuit 13, after which they are applied again to the shift register 11 and the signals of one frame are once stored in the frame memory 14 having a capacity of, for example, 256 x 256. The digital image signals stored in the frame memory 14 are sequentially read out therefrom following addresses which are specified by the address generation circuit 15, and processed by the calculation circuit 16, thereafter being stored in the data memory 17 in the form of data as a graphic form, such as its area, circumferential length, center of gravity, moment of inertia, features and so on. While no image signal processing takes place, the frame memory 14 and the data memory 17 are connected to a bus 41 of a host computer 32 so that the results of processing can be read into the host computer.

The microporgram control section 20 for controoling the operation of the hardware section 10 is equipped with a microprogram sequencer 21, a multiplexer 22, a microprogram memory 23 and a pipeline register 24.

The sequencer 21 responds to processing end information from the hardware section 10 and sequential control data from the pipeline register 24 to provides via the multiplexer 22 to the microprogram memory 23 its address where an instruction to be performed next is stored. Supplied with the address, the microprogram memory 23 reads out a new microinsturction from the specified address and sets it in the pipeline register 24. A control field of the microinstruction thus set controls via a signal line 25 the operation of predetermined hardware in the hardware section 10.

The microprogram memory 23 is constituted by a random access memory (RAM) of a capacity large enough to store several hundred microsteps, and it has stored therein, in the home of subroutines, fixed preprocesses in the smoothing circuit 12 and the isolated point eliminating circuit 13 and individual processes for extraction of image data in the calculation circuit 16.

That is, the above-mentioned microprogram memory has stored therein subroutine programs for calculations of the area, the length of the circumference and so on for controlling the data processing which is conducted by the calculation circuit 16 so as to obtain the area, the length of the circumference, the center of gravity, the moment of inertia, features, etc. of the graphic form, and subroutine programs for the smoothing and isolated point elimination processing.

Further, a main program is also stored which selectively specifies a combination of the subroutines, their processing sequence and number of repetitions of them in accordance with variations in the size, shape, etc. of the object which is subjected to image processing.

In the case where the processing is complex and a large number of subroutine programs are needed therefor and cannot be stored in the microprgram memory 23 alone, they are individually loaded by subroutine call instructions from a main memory 31 into the microprogram memory 23.

In the absence of an image processing start command signal 45 from the host computer 32, the sequencer 21 remains in a dynamic stop state at a specified address (an N address), but it responds to the image processing start command signal 45 to execute the main program and performs the subroutines in response to subroutine call instructions, thereafter returning to the main program.

By a branch to the specified address (the N address) at which is loaded an instruction to branch to that address (the N address) after completion of a series of operations of the main progarm, the microprogram control section 20 is

- 6 -                    0159364

put in the dynamic stop state. At this time, since a clock stop signal 48 to a gate circuit 46 goes to a "0", a set clock signal 47 for the pipeline register 24 is cut off and the contents of the pipeline register will not vary thereafter, permitting the host computer to access the microprogram memory 23. That is, in this state, the host computer writes the main program or subroutine program into the microprogram memory 23. For starting the microprogram sequencer the host computer, provides a logic "1" signal on the line of the image processing start command signal 45 for one microcycle. To the other input terminal of an OR gate 43 is connected the least significant bit line of a signal line 44. By presetting the aforementioned N address to an even address, the address on the signal line 44 at the following stage of the OR gate 43 is will specify an N + 1 address. As a result of this, the operation of the microprogram control section 20 gets out of the dynamic stop state and proceeds to the N + 1 address, and a microcommand stored in the microprogram memory 23 at the N + 1 address is read out therefrom for input to the pipeline register 24. The set clock signal 47 for the pipeline register 24 is provided when the output of the microprogram memory 23 is established to be the contents at the N + 1 address, that is, one microcycle after the outputting of the image processing start command signal 45. Incidentally, a flip-flop 50 is to delay the image processing start command signal for one microcycle. By the outputting of the image processing start command signal, the clock stop signal 48 is set to a "1", after which the microprogram control section 20 continues its operation until the clock stop signal is reset to a "0".

A description will be given, with reference to Fig. 2, of the operation for loading the circumferential length calculation subroutine from the main memory 31 of the host section 30 into the microprogram memory 23 by a calling operation after the area calculation subroutine already stored in the microprogram memory is called.

When the address generation circuit 15 specifies the final address in the frame memory 14, the sequencer 21 is notified of the completion of the area calculation for all image signals in the frame memory 14. Then the sequencer 21 supplies the microprogram memory 23 with the leading address of the subroutine call instruction in the program stored in the microprogram memory 23. On the basis of the subroutine call instruction composed of a series of micro-instructions which are sequentially set in the pipeline register 24, the leading address (MA1) in the main memory 31, which has stored therein the circumferential length calculation subroutine, is set via a data line 36 in a register in a direct memory access control unit (DMAC) 34, and then the leading address (MA2) of a subroutine storage area in the microprogrom memory 23 is set via a data line 37 in a register in the DMAC 34. Further, the number of bytes to be newly loaded into the microprogram memory 23 is set in a byte counter BC in the DMAC 34, a DMA start signal line 39 connected to the DMAC 34 is put in the ON state, and the contents of a microprogram counter in the sequencer 21 are pushed onto a stack and finally the process branches to an $N_1$ address.

Since an instruction to branch to the address (the $N_1$ address) is stored at the $N_1$ address which is the branch address, the microprogram control section is put into the aforementioned dynamic stop state.

On the other hand, the DMAC 34 thus started provides via an address line 40 to the main memory 31 the leading address (MA1) in the main memory 31 which has stored therein the circumferential length calculation subroutine, and via an address line 37 and the multiplexer 22 to the microprogram memory 23 the leading address (MA2) of the subroutine storage area in the microprogram memory 23. At about the same time, the DMAC 34 provides a read command and a write command to the main memory 31 and the microprogram memory 23, respectively, and controls a bus buffer 33. Upon each occurrence of the read/write command, the DMAC 34 increments the contents of MA1 and MA2 registers and decrements the contents of the byte counter BC. In this way, the circumferential length calculation subroutine is loaded from the main memory 31 into the microprogram memory 23 via the internal bus 41, the bus buffer 33, a microprogram input bus 42 and an input terminal IN.

When the byte counter BC decrements to zero upon completion of the DMA transfer of a predetermined number of bytes, the DMAC 34 provides a logic "1" signal for one microcycle on a signal line 35 connected to one input terminal of an OR gate 53.

The output of the OR gate 53 is connected to one input terminal of the OR gate 43 and an input terminal of the flip-flop 50 for delaying the image processing start command signal for one microcycle. The logic "1" signal, which is provided on the signal line 35 for one microcycle, causes the microsequencer to get out of the dynamic stop state in the same manner as does the aforesaid image processing start command signal 45. In consequence, the microprogram control section 20 proceeds to an $N_1 + 1$ address.

A microinstruction at the N + 1 address turns OFF the DMA start signal line 39 and then initiates the execution of the circumferential length calculation subroutine program just loaded as described above. When the sequencer is notified of completion of the execution of the subroutine program from the address generation circuit 15, the process returns to the main program and popping from the stack takes place in the sequencer 21.

While the above embodiment has been described in connection with the case of utilizing the DMA transfer, it is also possible to adopt such an arrangement that interrupts the host computer 32 on the basis of a subroutine call instruction and loads a required subroutine program into the microprogram memory 23 from the main memory 31 via the host computer 32.

As described above in detail, the present invention includes a hardware section capable of high-speed processing and a microprogram control section capable of controlling its operation at a high speed, and hence has the advantage of high-speed processing of image signals.

Further, according to the present invention, by dividing the entire processing program into subroutine programs according to the kinds of individual calculation processes, the main program which defines the contents of image processing can be composed of a series of subroutine call instructions, and the number of steps of their microprograms can be reduced. This permits the contents of image processing to be changed simply by loading the main program, and reduces the time therefor. In addition, in the case of effecting complex image processing involving a large number of subroutines, when all the subroutine programs cannot be made resident in the microprogram memory, they can be loaded from the main memory into the microprogram memory, so the capacity of the microprogram memory can be reduced, offering the advantage that the entire system can be made inexpensive.

Moreover, according to the present invention, since the contents of image processing can selectively be constituted by a combination of subroutine programs, the operation of returning to the main program is simple, providing the advantage of simplification of the software used.

CLAIM

A digital image signal processor which is provided with an image frame memory and a digital calculation circuit, characterized by the provision of a hardware section for processing and storing an input digital image signal supplied thereto and a microprogram control section for controlling the operation of the hardware section, wherein the microprogram control section is provided with a microprogram memory formed by a random access memory and controls the hardware section to store, in the form of independent subroutines, microprograms for the extraction of the area, circumferential length and other feature values of a graphic form form the digital image signal and for preprocesses of smoothing the isolated point elimination, whereby the contents of processing can freely be selected by a combination of the subroutines and they can be transferred from a main memory to the microprogram memory.

0159364

FIG. 1

0159364

FIG. 2

| | |
|---|---|
| SET MA1 | |
| SET MA2 | |
| SET BC | SUBROUTINE CALL |
| START ON DMA | |
| PUSH STACK | |
| N | BRANCH TO N ADDRESS |

LOADING OF SUBROUTINE

N+1 — START OFF DMA

EXECUTION OF SUBROUTINE

RETURN

POP STACK

# INTERNATIONAL SEARCH REPORT

International Application No. PCT/JP84/00479

## I. CLASSIFICATION OF SUBJECT MATTER (if several classification symbols apply, indicate all) ³

According to International Patent Classification (IPC) or to both National Classification and IPC

Int. Cl³ G06F 15/20, 9/26

## II. FIELDS SEARCHED

| Minimum Documentation Searched ⁴ | |
|---|---|
| Classification System | Classification Symbols |
| IPC | G06F 15/20, 9/22–9/26 |

| Documentation Searched other than Minimum Documentation to the Extent that such Documents are Included in the Fields Searched ⁵ |
|---|
| |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| Y | JP, A, 51-22348 (Hitachi, Ltd.) 23 February 1976 (23. 02. 74), Column 4, lines 16 to 20, Fig. 1 | 1 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| December 21, 1984 (21. 12. 84) | January 14, 1985 (14. 01. 85) |
| International Searching Authority ¹ | Signature of Authorized Officer ²⁰ |
| Japanese Patent Office | |

Form PCT/ISA/210 (second sheet) (October 1981)